# FASCICULE DE BREVET EUROPEEN

(11) **EP 3 764 047 B1**
(45) Date de publication et mention de la délivrance du brevet: **13.04.2022**
(21) Numéro de dépôt: 20181311.0
(22) Date de dépôt: 22.06.2020
(51) Int. Cl.: F25J 1/00, F25J 1/02

(54) **PROCÉDÉ ET INSTALLATION DE PRODUCTION D HYDROGÈNE LIQUIDE**
VERFAHREN UND ANLAGE ZUR HERSTELLUNG VON FLÜSSIGEM WASSERSTOFF
METHOD AND INSTALLATION FOR PRODUCING LIQUID HYDROGEN

(30) Priorité: 08.07.2019 FR 1907571
(43) Date de publication de la demande: 13.01.2021
(73) Titulaire: L'Air Liquide Société Anonyme pour l'Etude et l'Exploitation des Procédés Georges Claude, 75321 Paris (FR)
(72) Inventeur: ALLIDIERES, Laurent, 75321 PARIS (FR); RIGOUT, Grégoire, 78350 LES LOGES-EN-JOSAS (FR); BARJHOUX, Pierre, 38360 SASSENAGE (FR); MARLIER, Pierre-Germain, 75321 PARIS (FR)
(74) Mandataire: Air Liquide

(56) Documents cités:
- CN-A- 107 779 906
- FR-A1- 3 017 009
- US-A- 3 262 276
- US-A1- 2011 132 429
- US-A1- 2017 321 332

## Description

L'invention concerne un procédé et une installation de production d'hydrogène liquide.

L'invention concerne plus particulièrement un procédé de production d'hydrogène liquide au moyen d'un liquéfacteur alimenté par une source d'hydrogène gazeux, le liquéfacteur étant du type électrique et ayant une puissance de refroidissement variable dépendante de la puissance électrique consommée, le liquéfacteur étant alimenté électriquement par une première source d'électricité et étant relié à au moins source d'électricité supplémentaire fournissant un quantité d'électricité intermittente ou variable dans le temps.

En raison de sa densité, l'hydrogène liquide est privilégié à son état gazeux lorsque de grandes quantités de produit doivent être transportées sur de grandes distances. Un autre avantage de l'hydrogène liquide est lié à sa densité et la grande capacité de stockage dans une station-service pour le remplissage de réservoirs de véhicules à pile à combustible.

La faible densité de l'hydrogène liquide comparativement à l'eau par exemple limite la pression disponible par hauteur hydrostatique. A basse température cela peut engendrer des pertes par évaporation assez importantes lors des transferts.

Les systèmes de chargement de camions et les réservoirs dans les usines de liquéfaction de l'hydrogène peuvent engendrer des pertes pouvant aller jusqu'à 15 % de la production (0.2% perte du réservoir, 5% de vaporisation « flash » dans la vanne de remplissage du réservoir et 10% dans les procédés de remplissage des camions).

Ces pertes par évaporation peuvent bien sûr être récupérées, réchauffées, re-comprimées et être réinjectées dans le liquéfacteur. Ceci nécessite d'investir dans un système de recirculation des pertes et de sur-dimensionner le système de liquéfaction.

Une autre solution possible avec certains types de liquéfacteurs (particulièrement ceux fonctionnant avec un cycle à base d'hélium) est de sous refroidir l'hydrogène liquide en-dessous de sa température de saturation. Ceci permet de compenser les pertes par évaporation lors des phases de remplissage en utilisant de l'hydrogène froid dans les réservoirs pour recondenser les vaporisations « flashs ». Ce sous refroidissement est obtenu au détriment de l'énergie spécifique du liquéfacteur (car il est nécessaire de rajouter une énergie spécifique de sous refroidissement à l'énergie spécifique de liquéfaction à la température de saturation du liquide).

La liquéfaction de l'hydrogène nécessite une énergie électrique assez importante : de l'ordre de 6 à 14 kWh par kilogramme d'hydrogène liquéfié (selon les technologies de liquéfaction et des tailles d'usines). Afin de réduire l'empreinte carbone du procédé de liquéfaction, il est avantageux de coupler le liquéfacteur avec une source d'énergie renouvelable, qui peut être intermittente comme une source solaire ou éolienne. L'intermittence des sources électriques renouvelables rend le fonctionnement d'un liquéfacteur extrêmement difficile pour des raisons de stabilité du procédé. Pour cette raison, les installations de liquéfaction ne sont en général pas alimentées par des sources d'énergies intermittentes. En effet, le liquéfacteur est généralement physiquement intégré à l'usine de production d'hydrogène gazeux (la plupart du temps par reformage de gaz naturel) cette production d'hydrogène gazeux devant aussi, pour des raisons de durabilité des équipements, fonctionner en régime stabilisé. Document US 2017/321332 A1 montre un procédé selon le préambule de la revendication 1 et un appareil selon le préambule de la revendication 14.

Un but de la présente invention selon les revendications 1 et 14 est de pallier tout ou partie des inconvénients de l'art antérieur relevés ci-dessus. A cette fin, le procédé selon l'invention, par ailleurs conforme à la définition générique qu'en donne le préambule ci-dessus, est essentiellement caractérisé par les parties caractérisantes des revendications 1 et 14.

Ceci permet d'utiliser l'énergie intermittente quand elle est disponible pour sous refroidir le cas échéant ponctuellement la production d'un liquéfacteur à cycle hélium qui fonctionne à débit de liquéfaction stable à puissance de liquéfaction stable. Cette puissance de sous refroidissement, qui vient s'ajouter à la puissance de liquéfaction, est fluctuante selon l'apport d'énergie(s) renouvelable(s) disponible(s).

Par ailleurs, des modes de réalisation de l'invention peuvent comporter l'une ou plusieurs des caractéristiques suivantes :
- lorsque le liquéfacteur est alimenté électriquement au niveau d'énergie électrique nominal, l'hydrogène liquide produit par le liquéfacteur est à l'état saturé,
- lorsque le liquéfacteur est alimenté électriquement à un niveau d'énergie excédant ledit niveau nominal, l'hydrogène liquide produit par le liquéfacteur est sous-refroidi par rapport à son état saturé,
- au moins une partie de l'énergie électrique excédant ledit niveau nominal qui est fournie au liquéfacteur est utilisée par le liquéfacteur pour sous-refroidir l'hydrogène liquide produit à une température inférieure à sa température de saturation,
- au moins une partie de l'énergie électrique excédant ledit niveau nominal qui est fournie au liquéfacteur est fournie par la au moins source d'électricité supplémentaire,
- le liquéfacteur est configuré pour produire une quantité d'hydrogène liquide déterminée dans le temps avec un niveau de sous-refroidissement nul ou non nul fonction du niveau d'énergie électrique excédant ledit niveau nominal qui lui est fourni,
- l'hydrogène sous-refroidi produit par le liquéfacteur a une température abaissée de 0,01 degrés à près de 7°K, notamment entre 0,001 et 4°K, par rapport aux premières conditions thermodynamiques, jusqu'à notamment une température pouvant atteindre le niveau de température du point triple de l'hydrogène c'est-à-dire 13.8K,
- le niveau d'énergie électrique excédant ledit niveau nominal est variable entre zéro et vingt-cinq pourcent et notamment entre zéro et quinze pourcent du niveau d'énergie électrique nominal,
- la première source d'électricité comprend un réseau électrique auquel est relié le liquéfacteur,
- la au moins une source d'électricité supplémentaire comprend au moins l'un parmi : un générateur d'électricité de type éolien, un générateur d'électricité de type solaire.
- l'hydrogène liquide produit par le liquéfacteur est transféré dans un stockage liquide,
- lorsque le liquéfacteur est alimenté électriquement au niveau d'énergie électrique nominal déterminé, l'hydrogène liquide produit par le liquéfacteur est transféré dans le réservoir aux premières conditions thermodynamiques correspondant à la température de bulle de l'hydrogène à la pression de stockage dans le réservoir et, lorsque le liquéfacteur est alimenté électriquement à un niveau d'énergie excédant ledit niveau nominal, l'hydrogène produit par le liquéfacteur à ce même débit est transféré dans le réservoir à une température inférieure à la température de bulle de l'hydrogène à la pression de stockage dans le réservoir,
- l'hydrogène liquide est produit par le liquéfacteur avec un débit stable ou constant.

L'invention concerne également une installation de production d'hydrogène liquide comprenant un liquéfacteur, une source d'hydrogène gazeux reliée au liquéfacteur, le liquéfacteur étant du type électrique et ayant une puissance de refroidissement variable dépendante de la puissance électrique consommée, l'installation comprenant une première source d'électricité reliée au liquéfacteur pour alimenter électriquement ce dernier, au moins une source d'électricité supplémentaire fournissant un quantité d'électricité intermittente ou variable dans le temps et reliée au liquéfacteur pour alimenter électriquement ce dernier, l'installation comprenant en outre un contrôleur électronique configuré pour piloter la puissance de réfrigération du liquéfacteur pour produire de l'hydrogène liquide à de premières conditions thermodynamiques lorsque ce dernier est alimenté électriquement à un niveau d'énergie électrique nominal déterminé ou pour produire de l'hydrogène liquide sous-refroidi par rapport aux premières conditions thermodynamiques lorsque le liquéfacteur st alimenté électriquement à un niveau d'énergie excédant ledit niveau nominal.

Selon d'autres modes de réalisation possibles :
- le contrôleur électronique est relié électriquement à la première source d'électricité, à la au moins une source d'électricité supplémentaire et au liquéfacteur, le contrôleur électronique étant configuré pour alimenter électriquement à un niveau d'énergie électrique nominal déterminé le liquéfacteur à partir de la première source d'électricité et pour alimenter électriquement à un niveau d'énergie électrique supérieure au niveau nominal déterminé en complétant l'énergie électrique fournie par la première source d'électricité avec l'énergie électrique supplémentaire disponible fournie par la au moins une source d'électricité supplémentaire,

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue schématique et partielle illustrant un exemple de structure et de fonctionnement d'une installation conforme à l'invention,
[Fig. 2] représente une vue schématique et partielle illustrant un exemple des variations de la puissance électrique l'alimentation et de la puissance de liquéfaction du liquéfacteur de l'installation.

L'installation 1 de production d'hydrogène liquide comprend un liquéfacteur 2 reliée à une source 3 d'hydrogène gazeux. La source 3 d'hydrogène gazeux comprend par exemple une unité de reformage de gaz naturel (SMR) produisant de l'hydrogène gazeux fourni au liquéfacteur 2. Une ou plusieurs autres sources de gaz peuvent être prévues. Ainsi, la source 3 peut comprendre un réseau d'hydrogène et/ou une unité de production d'hydrogène (par exemple vapo-reformage et/ou par électrolyse ou toute autre source appropriée). La source 3 peut ainsi comprendre également la récupération d'hydrogène d'une source impure (gaz résiduaire de raffinerie, hydrogène fatal provenant d'électrolyseur chloro alkalin, ...) .

La source 3 d'hydrogène fournit par exemple un débit stable d'hydrogène (de préférence pur) à liquéfier ayant une pression qui peut être comprise entre 7 et 150 bar abs et à la température ambiante.

Dans le cas d'un SMR, ce dernier produit de préférence un débit constant d'hydrogène compris entre un débit maximum accepté par le liquéfacteur et un débit minimum de marche réduite du liquéfacteur 2 (typiquement le débit min est 30 à 40 % du débit maximum) Le rythme de changement de débit est de préférence de l'ordre de quelques pourcents du débit instantané par minute.

Le liquéfacteur 2 est du type électrique et a une puissance de refroidissement variable dépendante de la puissance électrique consommée. Par exemple, et sans que ceci soit limitatif pour autant, le liquéfacteur 2 peut être un liquéfacteur utilisant un fluide de travail comprenant de l'hélium (« liquéfacteur à cycle hélium » mais un autre gaz de travail est envisageable : azote, ou tout autre mélange...) assurant une compression (compresseurs), un refroidissement, une détente (turbine(s) et un réchauffage. En particulier, la puissance de liquéfaction peut être contrôlée en pilotant la vitesse de rotation d'un ou plusieurs moteur d'entraînement des compresseurs. Ces moteurs peuvent être des moteur électriques (synchrones haute vitesse sur paliers magnétiques notamment). Les compresseurs sont de préférence centrifuges à entraînement direct permettant un rendement élevé. La puissance de la ou des turbines peut être avantageusement récupérée et utilisée pour réduire la consommation du ou des moteurs. Ainsi, en augmentant la vitesse des moteurs (et donc le débit dans le cycle du gaz de travail), on augmente la puissance de réfrigération produite et donc la consommation électrique du liquéfacteur (et inversement).

Par exemple, le liquéfacteur 2 peut produire un débit stable d'hydrogène liquide entre son point de bulle et son point de solidification à la pression d'alimentation depuis la source 3 d'hydrogène gazeux moins les pertes de charge du gaz dans les échangeurs de chaleur dudit liquéfacteur (de l'ordre de quelques centaines de millibars).

Par exemple, le liquéfacteur 2 permet une production de 100kg d'hydrogène par jour à plus de 100 tonnes par jour. Cette capacité est adaptée en fonction de sa puissance de sous refroidissement et de la disponibilité en électricité.

Un tel liquéfacteur peut être du type « Turbo Brayton » commercialisé par le demandeur pouvant assurer notamment une réfrigération et une liquéfaction de 15 K à 20K.

Le liquéfacteur 2 est ainsi une machine électrique reliée à une première source 4 d'électricité pour alimenter électriquement ce dernier. Cette première source électrique (source principale) est de préférence stable et est ou comprend par exemple un réseau électrique.

Le liquéfacteur 2 est relié électriquement également (de préférence en parallèle) à au moins une source 5, 6 d'électricité supplémentaire. Cette source ou ces sources 5, 6 supplémentaire(s) sont du type fournissant un quantité d'électricité intermittente ou variable dans le temps, notamment des sources d'électricité de type renouvelables (éolien, solaire...) .

L'installation 1 comprend en outre un contrôleur 7 électronique configuré pour piloter la puissance de réfrigération du liquéfacteur 2 pour produire de l'hydrogène liquide à de premières conditions thermodynamiques lorsque ce dernier est alimenté électriquement à un niveau d'énergie électrique nominal déterminé (par la première source 4 d'électricité) ou pour produire de l'hydrogène liquide sous-refroidi par rapport aux premières conditions thermodynamiques lorsque le liquéfacteur 2 est alimenté électriquement à un niveau d'énergie excédant ledit niveau nominal (par la première source 4 d'électricité suppléée par au moins une source 5, 6 supplémentaire).

Le contrôleur 7 électronique comprend par exemple un microprocesseur, un ordinateur ou tout autre organe approprié.

Le contrôleur 7 électronique est configuré de préférence pour permettre de gérer la quantité d'énergie nécessaire à la liquéfaction de l'hydrogène en fonction de la demande en hydrogène liquide saturé et pour gérer l'excédent d'énergie électrique renouvelable afin de fournir du sous refroidissement.

La première source 4 d'électricité fournit par exemple l'énergie électrique nécessaire à liquéfier une quantité déterminée d'hydrogène à son point de bulle.

Ainsi, le débit de liquide saturé produit par le liquéfacteur 2 peut être constant, mais le niveau de sous refroidissement peut être exclusivement réalisé avec l'énergie apportée le cas échéant par la ou les sources 5, 6 d'énergie renouvelable excédentaire variables et intermittentes.

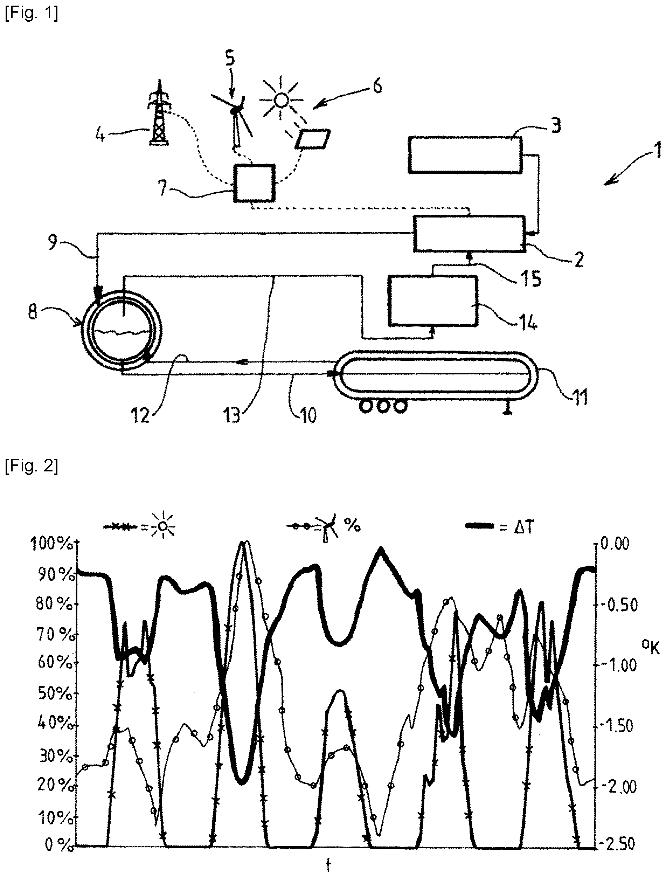

Un exemple de telles variations est illustré à la [Fig. 2]. Les courbes avec croix et cercles représentent respectivement les variations avec le temps t des quantité d'énergie produites à partir respectivement d'une source solaire et éolienne entre 0 et 100% d'un quantité déterminée. La troisième courbe représente la variation avec le temps t (en degré K) du sous refroidissement (ΔT) de l'hydrogène produit par le liquéfacteur 2. Le sous refroidissement est donc proportionnellement plus important lorsque l'énergie totale renouvelable disponible est importante.

Le liquéfacteur à capacité variable de refroidissement permet d'utiliser l'énergie intermittente lorsqu'elle est disponible. Ceci peut permettre d'accéder à des tarifs d'électricité préférentiels (typiquement utiliser le surplus solaire le jour, ou le surplus éolien en cas de tempête). Ces tarifs peuvent même être négatifs dans certains cas.

Cette configuration permet de générer à moindre coût un hydrogène sous refroidi nécessaire à la diminution des pertes par évaporation tout en utilisant en source un système de production stable d'hydrogène tel qu'un SMR et en liquéfiant un débit stable.

Comme illustré, l'hydrogène liquide produit par le liquéfacteur 2 peut être transféré dans un stockage 8 liquide via une conduite 9. Ce stockage peut être isolé sous vide et peut avoir une taille correspondant par exemple à plusieurs jours de production par le liquéfacteur (cinq jours par exemple).

Classiquement, la pression dans le stockage 8 peut être régulée, par exemple à une valeur fixe (par exemple entre 1,05 et 11 bar, par exemple entre 1,1 et 5 bar notamment 2,5 bar absolu). Cette pression peut aussi résulter d'un équilibre entre une phase liquide et un gaz à saturation en équilibre thermodynamique. Dans le cas d'un stockage d'hydrogène sous refroidi, on utilisera de manière avantageuse le volume important du stockage pour injecter l'hydrogène sous refroidi en fond de cuve et ainsi favoriser une stratification verticale en température de l'hydrogène dans le liquide de manière à ce que l'hydrogène en équilibre à l'interface liquide / gaz soit plus chaud que l'hydrogène liquide en fond de cuve. De la même manière, la phase gazeuse sera stratifiée de manière verticale en température.

Par pression de stockage 8 on entend par exemple la pression moyenne dans le stockage ou en partie basse du stockage ou en partie supérieure (dans le ciel gazeux). En effet, du fait de la faible densité de l'hydrogène, la pression dans la partie inférieure du stockage est sensiblement égale à la pression en partie supérieure.

L'installation 1 forme ainsi à un système de stockage d'énergie renouvelable sous la forme d'hydrogène sous refroidi. L'avantage par rapport à un système classique de stockage sous la forme d'hydrogène liquide est sa simplicité de mise en œuvre. En effet toute usine de liquéfaction d'hydrogène disposant d'un processus adaptatif de liquéfaction de l'hydrogène et permettant le sous refroidissement peut être converti en un tel système de stockage d'énergie.

Ce stockage 8 liquide peut être utilisé pour remplir (par exemple via au moins une conduite 10), des réservoirs 11 mobiles tels que des réservoirs liquides portés par des semi-remorques (capacité de 1000 à 4000kg par exemple). Cette conduite 10 peut être pourvue d'une vanne, par exemple pilotée, et/ou une pompe ou autre.

Ces réservoirs 11 peuvent être remplis avec de l'hydrogène liquide autour de la saturation, notamment avec des débits de 1000 à 2000 kg par heure par exemple. Une conduite 12 de récupération peut être prévue pour renvoyer le gaz vaporisé dans les réservoirs 11 lors de son remplissage (par exemple entre un et douze bar de pression et à un débit compris entre 100 et 200kg par heure. Ces pertes provenant de la vaporisation du liquide dans le réservoir à remplir ou les canalisations peuvent être d'autant plus réduites que l'hydrogène liquide est injecté avec un niveau de sous refroidissement non nul.

Une conduite 13 de retour peut être prévue pour renvoyer le gaz de vaporisation qui se créé dans le stockage 8 (dû aux entrées thermiques) vers un système 14 de récupération. Ce gaz froid a par exemple une pression comprise entre 1 et 12 bar et un débit de l'ordre de 0,1 et 1% de la capacité du stockage 8 par jour. Ce système 14 de récupération peut comprendre un réchauffeur, un stockage et un compresseur de recirculation.

Ce gaz récupéré peut être renvoyé vers le liquéfacteur 2 pour sa reliquéfaction via une conduite 15.

De cette façon, le surcoût du sous refroidissement peut être diminué du ratio de coûts entre l'énergie intermittente excédentaire et l'énergie de base.

Par exemple entre 0 et 10% de l'énergie électrique de liquéfaction peut être utilisée pour le sous refroidissement de l'hydrogène.

Cette solution peut s'appliquer à d'autres gaz que l'hydrogène et notamment le gaz naturel.

L'installation 1 pourrait comporter en outre une conduite de transfert ayant une extrémité raccordée à la sortie du liquéfacteur 2 et une extrémité destinée à être raccordée au(x) réservoir(s) 11 directement (sans passer par le stockage 8) . Cette conduite de transfert peut être munie d'une vanne (de préférence pilotée) pour transférer de l'hydrogène liquide du liquéfacteur 2 vers le réservoir 11.

Le stockage 8 et le réservoir 11 peuvent être à double parois et isolés sous vide.

## Revendications

1. Procédé de production d'hydrogène liquide au moyen d'un liquéfacteur (2) alimenté par une source (3) d'hydrogène gazeux, le liquéfacteur (2) étant du type électrique et ayant une puissance de refroidissement variable dépendante de la puissance électrique consommée, le liquéfacteur (2) étant alimenté électriquement par une première source (4) d'électricité et étant relié à au moins une source (5, 6) d'électricité supplémentaire fournissant un quantité d'électricité intermittente ou variable dans le temps, l'hydrogène liquide étant produit par le liquéfacteur (2) à de premières conditions thermodynamiques lorsque ce dernier est alimenté électriquement à un niveau d'énergie électrique nominal déterminé, **caractérisé en ce que**, lorsque le liquéfacteur (2) est alimenté électriquement à un niveau d'énergie excédant ledit niveau nominal, l'hydrogène produit par le liquéfacteur (2) est sous-refroidi par rapport aux premières conditions thermodynamiques.

2. Procédé selon la revendication 1, **caractérisé en ce que** lorsque le liquéfacteur (2) est alimenté électriquement au niveau d'énergie électrique nominal, l'hydrogène liquide produit par le liquéfacteur (2) est à l'état saturé.

3. Procédé selon l'une quelconque des revendications 1 ou 2, **caractérisé en ce que** lorsque le liquéfacteur (2) est alimenté électriquement à un niveau d'énergie excédant ledit niveau nominal, l'hydrogène liquide produit par le liquéfacteur (2) est sous-refroidi par rapport à son état saturé.

4. Procédé selon la revendication 3, **caractérisé en ce qu'**au moins une partie de l'énergie électrique excédant ledit niveau nominal qui est fournie au liquéfacteur (2) est utilisée par le liquéfacteur (2) pour sous-refroidir l'hydrogène liquide produit à une température inférieure à sa température de saturation.

5. Procédé selon l'une quelconque des revendications 1 à 4, **caractérisé en ce que** qu'au moins une partie de l'énergie électrique excédant ledit niveau nominal qui est fournie au liquéfacteur (2) est fournie par la au moins source (5, 6) d'électricité supplémentaire.

6. Procédé selon l'une quelconque des revendications 1 à 5, **caractérisé en ce que** le liquéfacteur (2) est configuré pour produire une quantité d'hydrogène liquide déterminée dans le temps avec un niveau de sous-refroidissement nul ou non nul fonction du niveau d'énergie électrique excédant ledit niveau nominal qui lui est fourni.

7. Procédé selon l'une quelconque des revendications 1 à 6, **caractérisé en ce que** l'hydrogène sous-refroidi produit par le liquéfacteur (2) a une température abaissée de 0,01 degrés à près de 7°K, notamment entre 0,001 et 4°K, par rapport aux premières conditions thermodynamiques, jusqu'à notamment une température pouvant atteindre le niveau de température du point triple de l'hydrogène c'est-à-dire 13.8K.

8. Procédé selon l'une quelconque des revendications 1 à 7, **caractérisé en ce que** le niveau d'énergie électrique excédant ledit niveau nominal est variable entre zéro et vingt-cinq pourcent et notamment entre zéro et quinze pourcent du niveau d'énergie électrique nominal.

9. Procédé selon l'une quelconque des revendications 1 à 8, **caractérisé en ce que** la première source (4) d'électricité comprend un réseau électrique auquel est relié le liquéfacteur (2) .

10. Procédé selon l'une quelconque des revendications 1 à 9, **caractérisé en ce que** la au moins une source (5, 6) d'électricité supplémentaire comprend au moins l'un parmi : un générateur (5) d'électricité de type éolien, un générateur (6) d'électricité de type solaire.

11. Procédé selon l'une quelconque des revendications 1 à 10, **caractérisé en ce que** l'hydrogène liquide produit par le liquéfacteur (2) est transféré dans un stockage (8) liquide.

12. Procédé selon l'une la revendication 11, **caractérisé en ce que**, lorsque le liquéfacteur (2) est alimenté électriquement au niveau d'énergie électrique nominal déterminé, l'hydrogène liquide produit par le liquéfacteur (2) est transféré dans le réservoir (8) aux premières conditions thermodynamiques correspondant à la température de bulle de l'hydrogène à la pression de stockage dans le réservoir (8) et **en ce que**, lorsque le liquéfacteur (2) est alimenté électriquement à un niveau d'énergie excédant ledit niveau nominal, l'hydrogène produit par le liquéfacteur (2) à ce même débit est transféré dans le réservoir (8) à une température inférieure à la température de bulle de l'hydrogène à la pression de stockage dans le réservoir (8) .

13. Procédé selon l'une quelconque des revendications 1 à 12, **caractérisé en ce que** l'hydrogène liquide est produit par le liquéfacteur (2) avec un débit stable ou constant.

14. Installation de production d'hydrogène liquide comprenant un liquéfacteur (2), une source (3) d'hydrogène gazeux reliée au liquéfacteur (2), le liquéfacteur (2) étant du type électrique et ayant une puissance de refroidissement variable dépendante de la puissance électrique consommée, l'installation comprenant une première source (4) d'électricité reliée au liquéfacteur (2) pour alimenter électriquement ce dernier, au moins une source (5, 6) d'électricité supplémentaire fournissant un quantité d'électricité intermittente ou variable dans le temps et reliée au liquéfacteur (2) pour alimenter électriquement ce dernier, l'installation (1) comprenant en outre un contrôleur (7) électronique configuré pour piloter la puissance de réfrigération du liquéfacteur pour produire de l'hydrogène liquide à de premières conditions thermodynamiques lorsque ce dernier est alimenté électriquement à un niveau d'énergie électrique nominal déterminé, **caractérisé en ce que** le contrôleur électronique est configuré pour piloter la puissance de réfrigération du liquéfacteur pour produire de l'hydrogène liquide sous-refroidi par rapport aux premières conditions thermodynamiques lorsque le liquéfacteur est alimenté électriquement à un niveau d'énergie excédant ledit niveau nominal.

15. Installation selon la revendication 14, **caractérisée en ce**
**que** le contrôleur (7) électronique est relié électriquement à la première source (4) d'électricité, à la au moins une source (5, 6) d'électricité supplémentaire et au liquéfacteur (2), le contrôleur (7) électronique étant configuré pour alimenter électriquement à un niveau d'énergie électrique nominal déterminé le liquéfacteur (2) à partir de la première source (4) d'électricité et pour alimenter électriquement à un niveau d'énergie électrique supérieure au niveau nominal déterminé en complétant l'énergie électrique fournie par la première source (4) d'électricité avec l'énergie électrique supplémentaire disponible fournie par la au moins une source (5, 6) d'électricité supplémentaire.

## Patentansprüche

1. Verfahren zur Erzeugung von flüssigem Wasserstoff mittels eines Verflüssigers (2), der von einer Quelle (3) für gasförmigen Wasserstoff versorgt wird, wobei der Verflüssiger (2) vom elektrischen Typ ist und eine von der verbrauchten elektrischen Leistung abhängige variable Kühlleistung hat, wobei der Verflüssiger (2) elektrisch von einer ersten Elektrizitätsquelle (4) versorgt wird und mit mindestens einer zusätzlichen Elektrizitätsquelle (5, 6) verbunden ist, die eine intermittierende oder zeitlich variable Elektrizitätsmenge abgibt, wobei der flüssige Wasserstoff vom Verflüssiger (2) unter ersten thermodynamischen Bedingungen erzeugt wird, wenn Letzterer elektrisch mit einem bestimmten Nennniveau elektrischer Energie versorgt wird, **dadurch gekennzeichnet, dass**, wenn der Verflüssiger (2) elektrisch mit einem Energieniveau versorgt wird, welches das Nennniveau übersteigt, der vom Verflüssiger (2) erzeugte Wasserstoff in Bezug auf die ersten thermodynamischen Bedingungen unterkühlt wird.

2. Verfahren nach Anspruch 1, **dadurch gekennzeichnet, dass**, wenn der Verflüssiger (2) elektrisch mit dem Nennniveau elektrischer Energie versorgt wird, der vom Verflüssiger (2) erzeugte flüssige Wasserstoff im gesättigten Zustand ist.

3. Verfahren nach einem der Ansprüche 1 oder 2, **dadurch gekennzeichnet, dass**, wenn der Verflüssiger (2) elektrisch mit einem Energieniveau versorgt wird, welches das Nennniveau übersteigt, der vom Verflüssiger (2) erzeugte flüssige Wasserstoff in Bezug auf seinen gesättigten Zustand unterkühlt ist.

4. Verfahren nach Anspruch 3, **dadurch gekennzeichnet, dass** mindestens ein Teil der das Nennniveau übersteigenden elektrischen Energie, die an den Verflüssiger (2) abgegeben wird, von dem Verflüssiger (2) dazu verwendet wird, den erzeugten flüssigen Wasserstoff auf eine Temperatur zu unterkühlen, die geringer als seine Sättigungstemperatur ist.

5. Verfahren nach einem der Ansprüche 1 bis 4, **dadurch gekennzeichnet, dass** mindestens ein Teil der das Nennniveau übersteigenden elektrischen Energie, die an den Verflüssiger (2) abgegeben wird, von der mindestens einen zusätzlichen Elektrizitätsquelle (5, 6) abgegeben wird.

6. Verfahren nach einem der Ansprüche 1 bis 5, **dadurch gekennzeichnet, dass** der Verflüssiger (2) dazu ausgestaltet ist, eine zeitlich bestimmte Menge flüssigen Wasserstoff mit einem Unterkühlungsniveau von null oder ungleich null zu erzeugen, das von dem Niveau elektrischer Energie abhängig ist, welches das an ihn abgegebene Nennniveau übersteigt.

7. Verfahren nach einem der Ansprüche 1 bis 6, **dadurch gekennzeichnet, dass** der vom Verflüssiger (2) erzeugte unterkühlte Wasserstoff eine Temperatur hat, die in Bezug auf die ersten thermodynamischen Bedingungen um 0,01 Grad bis fast 7 °K, insbesondere zwischen 0,001 und 4 °K, abgesenkt ist, insbesondere bis auf eine Temperatur, die das Temperaturniveau des Tripelpunkts von Wasserstoff erreichen kann, d. h. 13,8 °K.

8. Verfahren nach einem der Ansprüche 1 bis 7, **dadurch gekennzeichnet, dass** das Niveau elektrischer Energie, welches das Nennniveau übersteigt, zwischen null und fünfundzwanzig Prozent und insbesondere zwischen null und fünfzehn Prozent des Nennniveaus elektrischer Energie variabel ist.

9. Verfahren nach einem der Ansprüche 1 bis 8, **dadurch gekennzeichnet, dass** die erste Elektrizitätsquelle (4) ein elektrisches Netz umfasst, mit dem der Verflüssiger (2) verbunden ist.

10. Verfahren nach einem der Ansprüche 1 bis 9, **dadurch gekennzeichnet, dass** die mindestens eine zusätzliche Elektrizitätsquelle (5, 6) mindestens einen umfasst unter: einem Windkraft-Elektrizitätserzeuger (5), einem Solar-Elektrizitätserzeuger (6).

11. Verfahren nach einem der Ansprüche 1 bis 10, **dadurch gekennzeichnet, dass** der vom Verflüssiger (2) erzeugte flüssige Wasserstoff in einen Flüssigspeicher (8) transferiert wird.

12. Verfahren nach Anspruch 11, **dadurch gekennzeichnet, dass**, wenn der Verflüssiger (2) elektrisch mit dem bestimmten Nennniveau elektrischer Energie versorgt wird, der vom Verflüssiger (2) erzeugte flüssige Wasserstoff unter den ersten thermodynamischen Bedingungen in den Tank (8) transferiert wird, die der Siedetemperatur des Wasserstoffs beim Speicherdruck im Tank (8) entsprechen, und dass, wenn der Verflüssiger (2) elektrisch mit einem Energieniveau versorgt wird, welches das Nennniveau übersteigt, der vom Verflüssiger (2) erzeugte Wasserstoff mit dem gleichen Volumenstrom mit einer Temperatur in den Tank (8) transferiert wird, die geringer als die Siedetemperatur des Wasserstoffs beim Speicherdruck im Tank (8) ist.

13. Verfahren nach einem der Ansprüche 1 bis 12, **dadurch gekennzeichnet, dass** der flüssige Wasserstoff vom Verflüssiger (2) mit einem stabilen oder konstanten Volumenstrom erzeugt wird.

14. Anlage zur Erzeugung von flüssigem Wasserstoff, umfassend einen Verflüssiger (2), eine Quelle (3) für gasförmigen Wasserstoff, die mit dem Verflüssiger (2) verbunden ist, wobei der Verflüssiger (2) vom elektrischen Typ ist und eine von der verbrauchten elektrischen Leistung abhängige variable Kühlleistung hat, wobei die Anlage eine erste Elektrizitätsquelle (4) umfasst, die mit dem Verflüssiger (2) verbunden ist, um Letzteren elektrisch zu versorgen, mindestens eine zusätzliche Elektrizitätsquelle (5, 6), die eine intermittierende oder zeitlich variable Elektrizitätsmenge abgibt und mit dem Verflüssiger (2) verbunden ist, um Letzteren elektrisch zu versorgen, wobei die Anlage (1) ferner ein elektronisches Steuergerät (7) umfasst, das dazu ausgestaltet ist, die Kühlleistung des Verflüssigers zu steuern, um flüssigen Wasserstoff unter ersten thermodynamischen Bedingungen zu erzeugen, wenn Letzterer elektrisch mit einem bestimmten Nennniveau elektrischer Energie versorgt wird, **dadurch gekennzeichnet, dass** das elektronische Steuergerät dazu ausgestaltet ist, die Kühlleistung des Verflüssigers zu steuern, um in Bezug auf die ersten thermodynamischen Bedingungen unterkühlten flüssigen Wasserstoff zu erzeugen, wenn der Verflüssiger elektrisch mit einem Energieniveau versorgt wird, welches das Nennniveau übersteigt.

15. Anlage nach Anspruch 14, **dadurch gekennzeichnet, dass** das elektronische Steuergerät (7) elektrisch mit der ersten Elektrizitätsquelle (4), mit der mindestens einen zusätzlichen Elektrizitätsquelle (5, 6) und mit dem Verflüssiger (2) verbunden ist, wobei das elektronische Steuergerät (7) dazu ausgestaltet ist, den Verflüssiger (2) elektrisch mit einem bestimmten Nennniveau elektrischer Energie aus der ersten Elektrizitätsquelle (4) zu versorgen und elektrisch mit einem Niveau elektrischer Energie, das über dem bestimmten Nennniveau liegt, zu versorgen, indem die von der ersten Elektrizitätsquelle (4) abgegebene elektrische Energie um die verfügbare zusätzliche elektrische Energie ergänzt wird, die von der mindestens einen zusätzlichen Elektrizitätsquelle (5, 6) abgegeben wird.

## Claims

1. Process for the production of liquid hydrogen by means of a liquefier (2) fed by a source (3) of gaseous hydrogen, the liquefier (2) being of the electric type and having a variable cooling power dependent on the electrical power consumed, the liquefier (2) being supplied with electricity by a first source (4) of electricity and being connected to at least one additional source (5, 6) of electricity providing an amount of electricity which is intermittent or variable over time, the liquid hydrogen being produced by the liquefier (2) at first thermodynamic conditions when the liquefier is supplied with electricity at a predetermined nominal electrical energy level, **characterized in that**, when the liquefier (2) is supplied with electricity at an energy level exceeding the said nominal level, the hydrogen produced by the liquefier (2) is subcooled with respect to the first thermodynamic conditions.

2. Process according to Claim 1, **characterized in that**, when the liquefier (2) is supplied with electricity at the nominal electrical energy level, the liquid hydrogen produced by the liquefier (2) is in the saturated state.

3. Process according to either one of Claims 1 and 2, **characterized in that**, when the liquefier (2) is supplied with electricity at an energy level exceeding the said nominal level, the liquid hydrogen produced by the liquefier (2) is subcooled with respect to its saturated state.

4. Process according to Claim 3, **characterized in that** at least a portion of the electrical energy exceeding the said nominal level which is provided to the liquefier (2) is used by the liquefier (2) to subcool the liquid hydrogen produced to a temperature lower than its saturation temperature.

5. Process according to any one of Claims 1 to 4, **characterized in that** at least a portion of the electrical energy exceeding the said nominal level which is provided to the liquefier (2) is provided by the at least one additional source (5, 6) of electricity.

6. Process according to any one of Claims 1 to 5, **characterized in that** the liquefier (2) is configured in order to produce an amount of liquid hydrogen which is predetermined over time with a zero or non-zero level of subcooling which is a function of the level of electrical energy exceeding the said nominal level with which it is provided.

7. Process according to any one of Claims 1 to 6, **characterized in that** the subcooled hydrogen produced by the liquefier (2) has a temperature lowered by 0.01 to almost 7 K, in particular between 0.001 and 4 K, with respect to the first thermodynamic conditions, down in particular to a temperature which can reach the temperature level of the triple point of hydrogen, that is to say 13.8 K.

8. Process according to any one of Claims 1 to 7, **characterized in that** the level of electrical energy exceeding the said nominal level can vary between 0% and 25% and in particular between 0% and 15% of the nominal electrical energy level.

9. Process according to any one of Claims 1 to 8, **characterized in that** the first source (4) of electricity comprises a power grid to which the liquefier (2) is connected.

10. Process according to any one of Claims 1 to 9, **characterized in that** the at least one additional source (5, 6) of electricity comprises at least one among: a generator (5) of electricity of wind type, a generator (6) of electricity of solar type.

11. Process according to any one of Claims 1 to 10, **characterized in that** the liquid hydrogen produced by the liquefier (2) is transferred into a liquid storage facility (8).

12. Process according to Claim 11, **characterized in that**, when the liquefier (2) is supplied with electricity at the predetermined nominal electrical energy level, the liquid hydrogen produced by the liquefier (2) is transferred into the tank (8) at the first thermodynamic conditions corresponding to the bubble point of hydrogen at the storage pressure in the tank (8) and **in that**, when the liquefier (2) is supplied with electricity at an energy level exceeding the said nominal level, the hydrogen produced by the liquefier (2) at this same flow rate is transferred into the tank (8) at a temperature lower than the bubble point of hydrogen at the storage pressure in the tank (8).

13. Process according to any one of Claims 1 to 12, **characterized in that** the liquid hydrogen is produced by the liquefier (2) with a stable or unchanging flow rate.

14. Plant for the production of liquid hydrogen comprising a liquefier (2), a source (3) of gaseous hydrogen connected to the liquefier (2), the liquefier (2) being of the electric type and having a variable cooling power which depends on the electrical power consumed, the plant comprising a first source (4) of electricity connected to the liquefier (2) in order to supply the latter with electricity, at least one additional source (5, 6) of electricity which provides an amount of electricity which is intermittent or variable over time and which is connected to the liquefier (2) in order to supply the latter with electricity, the plant (1) additionally comprising an electronic controller (7) configured in order to manage the refrigerating power of the liquefier in order to produce liquid hydrogen at first thermodynamic conditions, when the latter is supplied with electricity at a predetermined nominal electrical energy level, **characterized in that** the electronic controller is configured in order to manage the refrigerating power of the liquefier in order to produce liquid hydrogen which is subcooled with respect to the first thermodynamic conditions, when the liquefier (2) is supplied with electricity at an energy level exceeding the said nominal level.

15. Plant according to Claim 14, **characterized in that** the electronic controller (7) is electrically connected to the first source (4) of electricity, to the at least one additional source (5, 6) of electricity and to the liquefier (2), the electronic controller (7) being configured in order to supply the liquefier (2) with electricity at a predetermined nominal electrical energy level from the first source (4) of electricity and in order to supply with electricity at a greater electrical energy level than the predetermined nominal level by supplementing the electrical energy provided by the first source (4) of electricity with the available additional electrical energy provided by the at least one additional source (5, 6) of electricity.
